# EUROPÄISCHE PATENTSCHRIFT

(11) **EP 3 253 644 B1**
(45) Veröffentlichungstag und Bekanntmachung des Hinweises auf die Patenterteilung: **22.05.2019**
(21) Anmeldenummer: 15813871.9
(22) Anmeldetag: 22.12.2015
(51) Int. Cl.: B62D 5/04

(54) **VORRICHTUNG ZUR EINBRINGUNG EINES HILFSDREHMOMENTS IN EINE LENKWELLE UND ELEKTRO-MECHANISCHE HILFSKRAFTLENKUNG**
DEVICE FOR INTRODUCING AN AUXILIARY TORQUE INTO A STEERING SHAFT AND ELECTROMECHANICAL POWER STEERING DEVICE
DISPOSITIF DESTINÉ À APPLIQUER UN COUPLE D'ASSISTANCE À UN ARBRE DE DIRECTION ET DIRECTION ASSISTÉE ELECTROMÉCHANIQUE

(30) Priorität: 04.02.2015 DE 102015201938
(43) Veröffentlichungstag der Anmeldung: 13.12.2017
(73) Patentinhaber: ThyssenKrupp Presta AG, 9492 Eschen (LI); thyssenkrupp AG, 45143 Essen (DE)
(72) Erfinder: HEGEDÜS, Csaba, 3182 Karancslapujtó (HU); KATONA, Balint, 9470 Buchs (CH)
(74) Vertreter: thyssenkrupp Intellectual Property GmbH
(86) Internationale Anmeldenummer: PCT/EP2015/080941
(87) Internationale Veröffentlichungsnummer: WO 2016/124299

(56) Entgegenhaltungen:
- WO-A1-02/40897
- DE-A1-102012 010 869
- US-A- 3 635 100

## Beschreibung

### Stand der Technik

Die Erfindung betrifft eine Vorrichtung zur Einbringung eines Hilfsdrehmoments in eine Lenkwelle einer elektro-mechanischen Hilfskraftlenkung, mit einem Elektromotor, der eine Motorwelle aufweist, die drehmomentschlüssig über ein Kupplungselement mit einem Getrieberad gekuppelt ist, welches mit einem drehfest auf der Lenkwelle angeordneten Zahnrad kämmt, und eine elektro-mechanische Hilfskraftlenkung.

Im Stand der Technik sind Kraftfahrzeuglenkungen mit Hilfskraftunterstützung bekannt, bei denen zusätzlich zum Lenkmoment, welches vom Fahrer manuell auf das Lenkrad ausgeübt wird, durch eine elektro-mechanische Hilfskraftunterstützung zur Unterstützung und Entlastung des Fahrers eine Hilfskraft in den Lenkstrang eingebracht wird, und gegebenenfalls auch ein Zusatzlenkwinkel. Die einzubringende Unterstützungskraft wird anhand des Drehmoments, d.h. den Betrag des Lenkmoments bestimmt, welches in den lenkradseitigen Teil der Lenkwelle, die Eingangswelle, eingebracht, und über die mit der Eingangswelle verbundene Ausgangswelle in das Lenkgetriebe eingeleitet wird. Im Lenkgetriebe wird die Drehbewegung der Lenkwelle in eine Verschiebung der Spurstangen umgesetzt und als Lenkbewegung auf die zu lenkenden Räder übertragen.

Bei der eingangs genannten Bauart einer Vorrichtung wird die Hilfskraft als Hilfsdrehmoment zusätzlich zum manuell eingebrachten Lenkmoment in die Lenkwelle eingekoppelt. Dabei wird das Hilfsdrehmoment durch einen Elektromotor erzeugt, der über eine Steuerung in Abhängigkeit vom gemessenen Lenkmoment, dem Lenkwinkel und/oder weiteren Messgrößen angetrieben wird. Die Motorwelle des Elektromotors ist drehfest, d.h. drehmomentschlüssig mit einem Getrieberad verbunden, welches in einer bekannten Bauart beispielsweise als Schnecke ausgebildet ist und mit einem Zahnrad kämmt, welches entsprechend als Schneckenrad ausgebildet sein kann und drehfest auf der Lenkwelle angebracht ist. Das Hilfsdrehmoment kann durch eine Anordnung des Getrieberads auf der Ausgangswelle, der Eingangswelle oder am Lenkritzel im Lenkgetriebe in die Lenkwelle eingeleitet werden.

Für einen zuverlässigen, verschleißarmen Betrieb und zur Erzeugung eines ansprechenden, harmonischen Lenkgefühls wird in der Praxis gefordert, dass das Hilfsdrehmoment stoss- und ruckfrei in die Lenkung eingebracht wird, und auch keine störenden Betriebsgeräusche entstehen. Um dies zu realisieren, ist es im Stand der Technik bekannt, zwischen der Motorwelle und dem Getrieberad, beispielsweise der Schnecke, ein Kupplungselement anzuordnen. Um die Drehmomenteinleitung zu vergleichmäßigen und unerwünschtes Spiel auszugleichen, ist es beispielsweise aus der DE 10 2012 010 869 A1, die die vorkennzeichnenden Merkmale des Anspruchs 1 offenbart, bekannt, zwischen der Motorwelle und der Schnecke ein Kupplungselement einzusetzen, welches als Dämpfungskoppler ausgebildet ist, der einen inneren und einen äußeren Rotor aufweist mit einem dazwischen angeordneten, aus Elastomermaterial ausgebildeten Dämpfungselement. Dadurch wird eine Art Klauenkupplung bereitgestellt, welche eine federnde, gedämpfte Einkopplung des Hilfsdrehmoments ermöglicht.

Nachteilig an dem im Stand der Technik bekannten Kupplungselement ist der relativ aufwendige Aufbau aus mehreren funktionalen Bauelementen, welcher zu einem hohen Fertigungs- und Kostenaufwand führt. Außerdem wird ein relativ großer Bauraum beansprucht. Angesichts der vorangehend erläuterten Problematik ist es eine Aufgabe der vorliegenden Erfindung, bei einer Vorrichtung der eingangs genannten Art eine verbesserte Kopplung zwischen Elektromotor und Getrieberad mit einem geringeren Herstellungs- und Kostenaufwand zur Verfügung zu stellen.

### Darstellung der Erfindung

Zur Lösung der vorgenannten Problematik wird erfindungsgemäß vorgeschlagen, dass das Kupplungselement ein torsionselastisches Stabelement aufweist, welches torsionsweicher ist als die Motorwelle und das Getrieberad.

Bevorzugt bildet das koaxial angeordnete Stabelement eine Verbindungswelle zwischen der Motorwelle und dem Getrieberad, beispielsweise einer Schnecke. Eine erfindungsgemäße Besonderheit ist dabei, dass das Stabelement um seine Längsachse torsionsweicher, d.h. bezüglich einer Torsion elastischer als die Motorwelle und ebenfalls elastischer als das Getrieberad ist. Anders ausgedrückt bildet das Federelement eine Drehstabfeder, die hinsichtlich einer Verdrehung um ihre Längsachse eine geringere Federsteifigkeit, d.h. Torsionssteifigkeit hat als die Motorwelle und eine geringere Torsionssteifigkeit als das Getrieberad. Das führt bei der Übertragung eines Hilfsdrehmoments dazu, dass die Motorwelle und das Getrieberad unverformt bleiben, d.h. nicht in sich verdreht werden, während das Stabelement abhängig vom an dessen Enden anliegenden Drehmoment federnd tordiert wird. Dabei ist unter unverformt zu verstehen, dass im Verhältnis zu der relativ großen Verdrillung des Stabelements nur eine sehr geringe elastische Verformung der Motorwelle und des Getrieberades bei der Drehmomentenbeaufschlagung vorherrscht.

Ein Vorteil der Erfindung ist, dass das Kupplungselement durch ein einziges Bauteil realisiert werden kann, nämlich das Stabelement. Dieses Stabelement kann mit geringem Aufwand hergestellt und montiert werden, wobei das von Drehstabfedern bekannte umfangreiche Fachwissen unmittelbar bei der Konzeption und Herstellung genutzt werden kann. Daher kann auch mit geringem Aufwand eine Anpassung des Kupplungselements im Hinblick auf die geforderten elastischen und sonstigen mechanischen Eigenschaften erfolgen, beispielsweise Festigkeit, Torsions- und Biegesteifigkeit, Federkennlinie, Dämpfungseigenschaften, Schwingungsverhalten und dergleichen. Dadurch können günstige Herstellungskosten realisiert werden.

Dadurch, dass die elastischen Eigenschaften wie Federkonstante und Federweg bzw. Federwinkel durch die Gestaltung der Abmessungen und des Materials des Stabelements in weiten Grenzen vorgegeben werden können, kann eine optimierte Anpassung an die speziellen Anforderungen der vorliegenden Anwendung als Drehmoment übertragendes Kupplungselement erfolgen. Auf diese Weise kann beispielsweise eine ausreichend große Federkraft bereitgestellt werden, um unter allen auftretenden Betriebsbedingungen eine geräusch- und verschleißarme Funktion zu gewährleisten.

Ein weiterer Vorteil der erfindungsgemäßen Verwendung einer Drehstabfeder als Kupplungselement ist, dass im Vergleich zu anderen bekannten Typen von Feder- und Dämpfungselementen eine besonders kleine Bauform realisiert werden kann. Im Unterschied zu bekannten Federanordnungen, Klauen-Kupplungen oder dergleichen wird nämlich in der Regel der Querschnitt bzw. Durchmesser kleiner sein als derjenige der Motorwelle bzw. des Getrieberades oder dessen Achse. Dies ergibt sich daraus, dass die Federsteifigkeit eines Drehstabs mit kreisrundem Querschnitt proportional zu d⁴ (d=Durchmesser) ist, und umgekehrt proportional zur federnden Länge L. Bei einer durch den verfügbaren Einbauraum vorgegebenen Einbaulänge kann unter Berücksichtigung von Materialfestigkeit, Schubmodul und des zu übertragenden Drehmoments einfach der Querschnitt des Stabelements berechnet werden.

Das Stabelement überträgt das Hilfsdrehmoment von der Motorwelle auf das Getrieberad. Dabei kann bevorzugt vorgesehen sein, dass zwischen der Motorwelle und dem Getrieberad ein Überlastschutz vorgesehen ist, der das Stabelement vor einer Zerstörung bei der Überschreitung eines Grenzdrehmoments schützt. Dies kann durch einen losen Formschluss zwischen der Motorwelle und dem Getrieberad erfolgen. Dieser Formschluss wird ab der Überschreitung des Grenzdrehmoments und dem damit verbundenen relativen Verdrehwinkel zwischen Motorwelle und Getrieberad in Eingriff gebracht, so dass das Hilfsdrehmoment direkt von der Motorwelle auf das Getrieberad übertragen wird. Der Überlastschutz kann beispielsweise über ein Zweiflachprofil an der Motorwelle und einer korrespondierenden Zweiflachbohrung am Getrieberad realisiert werden, wobei diese durch einen loser Formschluss zusammen wirken. Vorteil des Überlastschutzes ist die damit verbundene Steigerung der Betriebssicherheit.

Bevorzugt beträgt die Torsionssteifigkeit des Stabelements zwischen 5 Nm/° und 30 Nm/°.

Ein zusätzlicher Vorteil ergibt sich daraus, dass das Stabelement biegeelastischer ist als die Motorwelle und das Getrieberad. Das Stabelement hat nämlich ebenfalls eine vorgegebene Biegesteifigkeit, das ist die Federsteifigkeit bezüglich einer Biegung quer zu seiner Längserstreckung. Dabei hat das Stabelement eine geringere Biegesteifigkeit als die Motorwelle und ebenfalls eine geringere Biegesteifigkeit als das Getrieberad bzw. dessen Achse. Die bei einer Verbiegung des Stabelements in bezüglich der Lenkwelle in radialer Richtung ausgeübte Federkraft kann dazu genutzt werden, das Getrieberad - beispielsweise die Schnecke - gegen das Zahnrad - beispielsweise das Schneckenrad - federnd anzudrücken. Hierzu wird bezüglich der gemeinsamen Achse von Motorwelle und Getrieberad ein Winkelversatz vorgegeben, so dass die Verzahnung des Getrieberads in Richtung des kämmenden Eingriffs gegen die Verzahnung des Zahnrads federbelastet vorgespannt wird. Dies ermöglicht eine spielfreie Kämmung zwischen Getrieberad und Zahnrad allein durch das Kupplungselement, ohne dass zusätzliche Anfederungs- oder Vorspannvorrichtungen wie im Stand der Technik erforderlich wären. Dadurch kann die Anzahl der Bauteile, der Fertigungs- und Montageaufwand und damit der Kostenaufwand reduziert werden.

Die freie Länge des Stabelements, das ist die Länge zwischen den Einspann- bzw. Befestigungspunkten am Getrieberad und Zahnrad, die für eine federnde Torsion bzw. Biegung zur Verfügung steht, beträgt mindestens 2 mm, in einer bevorzugten Ausführung 5 mm. Besonders bevorzugt weist die freie Länge einen Wert zwischen 5mm und 40mm auf.
Eine Ausführungsform der Erfindung sieht vor, dass das Stabelement eine kleinere Querschnittsfläche und/ oder ein kleineres Torsionsflächenträgheitsmoment hat als die Motorwelle und das Getrieberad. Dadurch ist es möglich, eine besonders kompakte Bauform zu realisieren, insbesondere auch im Hinblick auf die Befestigung des Stabelements an der Motorwelle und dem Getrieberad.

Bezüglich des verwendeten elastischen Materials kann das Stabelement aus einem Werkstoff mit einem größeren, gleichen oder kleineren Schubmodul als die Motorwelle und das Getrieberad gefertigt sein. Zur Anpassung des Stabelements an gegebene Randbedingungen wie Bauraum, zu übertragendes Drehmoment, Torsions- und Biegesteifigkeit, Federkennlinie, Dämpfungseigenschaften, Schwingungsverhalten etc. kann es zweckmäßig sein, das Material des Stabelements im Hinblick auf eine optimierte Funktionalität unabhängig von den Materialien auszuwählen, aus denen die Motorwelle oder das Getrieberad gefertigt werden. So ist es beispielsweise denkbar, ein Material mit kleinerem Schubmodul einzusetzen, um eine weichere Federung bei hinreichendem Materialquerschnitt zu realisieren, oder ein größeres Schubmodul, um einen kleineren Querschnitt oder eine kleinere Baugröße zu ermöglichen.

Es ist weiterhin vorteilhaft, dass das Stabelement über eine kraft- und/oder form- und/oder stoffschlüssige Verbindung mit der Motorwelle und/oder dem Getrieberad verbunden ist. Zwischen der Motorwelle und dem Getrieberad muss zur Übertragung des Drehmoments eine drehmomentschlüssige Verbindung hergestellt werden. Beispielsweise kann das Stabelement in einen Presssitz eingepresst oder thermisch eingeschrumpft werden zur Ausbildung eines Kraftschlusses, oder es können Verbindungselemente nach Art einer Verstiftung oder Verkeilung eingesetzt werden. Alternativ können Formschlussverbindungen mit ineinander eingreifenden mehrkantigen oder unrunden Anschlusselementen realisiert werden, wobei eine vorteilhafte Weiterbildung eine sogenannte Rändelverbindung ist. Dabei werden das Stabelement und/oder eine korrespondierende Aufnahmebohrung in der Motorwelle bzw. im Getrieberad mit einer axialen Längsverzahnung versehen, die sich beim Einpressen unter plastischer Verformung in die korrespondierende Fügefläche des Verbindungspartners eingräbt. Auf diese Weise kann ein besonders belastbarer Kraft- und Formschluss ausgebildet werden. Weiter ist es auch denkbar und möglich, auf dem Stabelement eine Rollierung in Form eines Querrändels oder eines Längsrändels vorzusehen und dieses Stabelement in eine kreiszylindrische Aufnahmebohrung zu verpressen. Mit Vorteil kann in der Aufnahmebohrung ein Längsrändel oder Querrändel eingebracht sein. Alternativ oder zusätzlich kann ein Stoffschluss erzeugt werden, beispielsweise durch eine Verklebung, eine Verschweißung durch Reib-, Ultraschall- oder Laserschweißverfahren oder dergleichen. Grundsätzlich kann aus den Verbindungsmethoden, die zur Einspannung eines Drehstabs im Stand der Technik bekannt sind, die Fügetechnik ausgewählt werden, die den Anforderungen am besten Rechnung trägt.

Bei einer vorteilhaften Ausführungsform der Erfindung ist das Stabelement einstückig mit der Motorwelle und/ oder dem Getrieberad ausgebildet. Dabei wird ein integriertes Bauelement gebildet, wobei das Stabelement und die Motorwelle, oder das Stabelement und das Getrieberad, beispielsweise eine Schnecke, oder das Stabelement und die Motorwelle und das Getrieberad aus einem einzigen Stück desselben Materials gefertigt werden. Als Material kann beispielsweise Stahl verwendet werden, aus dem besagtes integriertes Stabelement durch nichtspanende und/oder spanende Bearbeitung hergestellt wird. Es kann eine über seine einzelnen Funktionsbereiche durchgehende homogene Härte haben, oder auch Bereiche unterschiedlicher Härte aufweisen. So ist es beispielsweise denkbar, durch partielle Härtung Bereiche unterschiedlicher Eigenschaften auszubilden, beispielsweise eine besonders haltbare Oberfläche der Schnecke zu realisieren. Die partielle Härtung kann beispielsweise induktiv erfolgen. Zu diesem Zweck ist es ebenfalls denkbar, auf das gesamte integrierte Bauteil oder Teile davon speziell angepasste Oberflächenstruktur oder Oberflächenbeschichtungen aufzubringen, beispielsweise Titannitrid, Siliziumkarbid, Borkarbid oder dergleichen, um die Gleitfähigkeit und/oder die Haltbarkeit zu verbessern.

Bevorzugt ist das Getrieberad als Schnecke und das Zahnrad als Schneckenrad ausgebildet. Dabei handelt es sich um eine erprobte Ausführungsform eines Getriebes zum Einbringen eines Zusatzdrehmoments, bei der erfindungsgemäß die Schnecke über ein Stabelement, d.h. einen torsionselastischen Drehstab mit der Motorwelle verbunden ist. Dadurch kann die Einkopplung eines Drehmoments ruck- und stoßfrei erfolgen. Außerdem kann der Drehstab aufgrund seiner biegeelastischen Eigenschaften dazu eingesetzt werden, die Schnecke in kämmenden Eingriff mit dem Schneckenrad federnd anzudrücken. Dies kann einfach dadurch bewerkstelligt werden, dass zwischen der Drehachse der Motorwelle und der Drehachse der Schnecke ein Winkelversatz vorgegeben wird, so dass das Stabelement elastisch durchgebogen wird. Die dabei auftretende Rückstellkraft sorgt dafür, dass die Schneckengänge der Schnecke spielfrei mit der Verzahnung des Schneckenrads kämmen. Dies kommt einer verbesserten Laufruhe und einem geringeren Verschleiß zugute.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Darstellung eines Lenksystems eines Kraftfahrzeugs mit einer Hilfskraftunterstützung;
- Figur 2: eine schematische perspektivische Ansicht einer erfindungsgemäßen Vorrichtung zur Einbringung eines Hilfsdrehmoments in teilweise auseinandergenommenen Zustand;
- Figur 3: eine schematische Schnittansicht durch eine Vorrichtung gemäß Figur 2 in einer ersten Ausführungsform;
- Figur 4: eine schematische Schnittansicht durch eine Vorrichtung gemäß Figur 2 in einer zweiten Ausführungsform;
- Figur 5: eine schematische Schnittansicht durch eine Vorrichtung gemäß Figur 2 in einer dritten Ausführungsform;
- Figur 6: eine perspektivische Ansicht einer erfindungsgemäß ausgestalteten Baugruppe umfassend Motorwelle, Kupplungselement und Schnecke.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

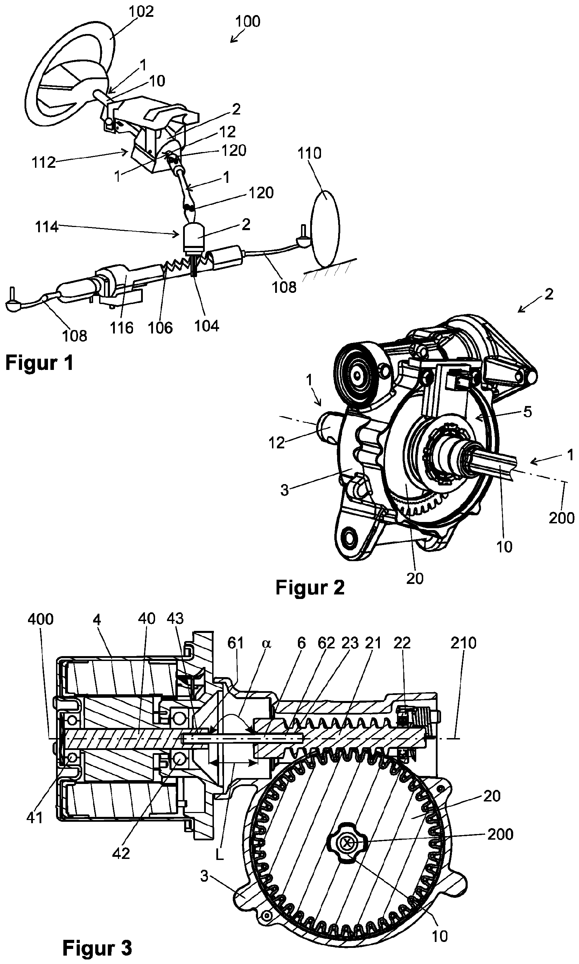

In Figur 1 ist eine Kraftfahrzeuglenkung 100 schematisch dargestellt, die eine Lenkwelle 1 aufweist. An der Eingangswelle 10 der Lenkwelle 1 ist ein Lenkrad 102 angebracht, über das ein Fahrer ein Lenk-Drehmoment - auch kurz als Lenkmoment bezeichnet - als Lenkbefehl in die Lenkwelle 1 einbringen kann. Das Lenkmoment wird über die Lenkwelle 1 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 des Kraftfahrzeugs überträgt.

Eine elektrische Hilfskraftunterstützung kann als eingangsseitig mit der Lenkwelle 1 gekoppelten Hilfskraftunterstützung 112 und/oder einer an dem Ritzel 104 mit der Lenkwelle 1 gekoppelten Hilfskraftunterstützung 114 und/oder einer mit der Zahnstange 106 gekoppelten Hilfskraftunterstützung 116 vorgesehen sein. Die Hilfskraftunterstützungen 112 oder 114 umfassen jeweils eine Vorrichtung 2 zur Einbringung eines Hilfsdrehmoments in die Lenkwelle 1, mit der ein Hilfsdrehmoment oder ein Zusatzlenkwinkel in die Lenkwelle 1 oder das Lenkritzel 104 eingekoppelt werden kann, wodurch der Fahrer bei der Lenkarbeit unterstützt wird. Die Unterstützung kann ebenfalls durch eine Hilfskraftunterstützung 116 erfolgen, mit der eine lineare Hilfskraft über die Zahnstange 106 in die Spurstange 108 eingebracht werden kann. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor ermittelten, vom Fahrer eingebrachten Lenkmoments bestimmt. Ein derartiger Drehmoment-sensor ist üblicherweise in einer Hilfskraftunterstützung 112 oder 114 zusammen mit einer Vorrichtung 2 integriert und hier nicht im Einzelnen dargestellt.

Kurz zusammengefasst sind in dem Drehmomentsensor die Eingangswelle 10 und eine Ausgangswelle 12 drehelastisch über einen Drehstab miteinander gekoppelt. Damit führt ein von einem Fahrer über das Lenkrad 102 in die Eingangswelle 10 eingebrachtes Drehmoment zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann über einen Drehwinkelsensor gemessen werden und aufgrund der bekannten Torsionssteifigkeit des Drehstabes ein entsprechendes Eingangsdrehmoment relativ zur Ausgangswelle 12 bestimmt werden. Auf diese Weise wird durch die Messung der relativen Verdrehung zwischen Eingangswelle 10 und Ausgangswelle 12 das Drehmoment bestimmt. Ein derartiger Drehmomentsensor ist prinzipiell bekannt und kann beispielsweise durch eine elektromagnetischen Sensoranordnung oder eine andere Messung der Relativverdrehung realisiert werden.

Entsprechend wird anhand des gemessenen Lenkmoments, welches von dem Fahrer über das Lenkrad 102 auf die Lenkwelle 1 beziehungsweise die Eingangswelle 10 aufgebracht wird, ein Hilfsdrehmoment berechnet, welches mittels einer Vorrichtung 2 in einer der Hilfskraftunterstützungen 112 oder 114 in die Lenkwelle eingebracht wird.

Alternativ oder in Kombination mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 in der Figur 1 umfasst weiterhin mindestens ein, bevorzugt zwei kardanische Gelenke 120, mittels welchem der Verlauf der Lenkwelle 1 im Kraftfahrzeug an die räumlichen Gegebenheiten angepasst werden kann.

Figur 2 zeigt eine Vorrichtung 2 teilweise in perspektivischer Ansicht, wobei zur besseren Übersicht der axiale Gehäusedeckel auf der dem Betrachter zugewandten Seite weggelassen ist. Auf der Lenkwelle 1, genauer auf der Ausgangswelle 12, ist ein als Schneckenrad 20 ausgebildetes Getrieberad drehfest koaxial zur Lenkwellenachse 200 angebracht, welche damit auch die Schneckenradachse bildet. Durch eine Drehung des Schneckenrades 20 um die Schneckenradachse 200 kann ein Hilfsdrehmoment in die Lenkwelle 1 eingebracht werden, um entsprechend eine Hilfskraft beziehungsweise einen Zusatzlenkwinkel in den Lenkstrang einzubringen. Das Schneckenrad 20 ist in einem Gehäuse 3 angeordnet. Mittels einer Sensoranordnung 5, beispielsweise einer magnetischen Sensoranordnung, kann die Verdrehung der Eingangswelle 10 relativ zur Ausgangswelle 12 gemessen und daraus das vom Fahrer in das Lenkrad 102 eingebrachte Lenkmoment bestimmt werden.

Aus Figur 3 ist ein Schnitt senkrecht zur Lenkwellenachse 200 (Schneckenradachse) durch eine Vorrichtung 2 gemäß Figur 2 in einer ersten Ausführungsform durch das Schneckenrad 20 dargestellt. Daraus geht hervor, wie eine Schnecke 21, deren Schneckenachse 210 quer zur Schneckenradachse 200 liegt, in kämmendem Eingriff mit dem Schneckenrad 20 steht. Die Schnecke 21 ist in einer Lagervorrichtung 22 um die Schneckenachse 210 drehbar im Gehäuse 3 gelagert.

An dem Gehäuse 3 ist ein Elektromotor 4 angeflanscht mit einer Motorwelle 40, die um ihre Motorwellenachse 400 drehend antreibbar ist. Die Motorwelle ist in Wälzlagern 41, 42 gelagert.

Die Motorwelle 40 ist über ein Kupplungselement, nämlich ein erfindungsgemäßes torsionselastisches Stabelement 6 drehmomentschlüssig mit der Schnecke 21 verbunden. Das Stabelement 6 bildet einen torsionselastischen Drehstab mit einer freien Länge L, das ist die Länge zwischen den Einspann- bzw. Befestigungspunkten an Motorwelle 40 und Schnecke 21, der über diese freie Länge L eine geringere Torsionssteifigkeit hat als die Motorwelle 40 und als die Schnecke 21. Die freie Länge L kann bevorzugt größer als 2 mm sein, vorteilhaft ist eine Länge L von etwa 5 mm.

Figur 3 zeigt eine erste Ausführungsform, bei der die Motorwelle 40, das Stabelement 6 und die Schnecke 21 zunächst als separate Teile gefertigt und anschließend bezüglich der Rotationsachse 400 bzw. 210 axial drehfest zusammengefügt worden sind. Hierzu ist in dem abtriebsseitigen Ende der Motorwelle 40 eine koaxiale Bohrung 43 eingebracht, in die ein erster Endbereich 61 des Stabelements 6 drehfest eingefügt ist. Der zweite Endbereich 62 des Stabelements 6 ist in eine koaxiale Bohrung 23 im motorseitigen Ende der Schnecke 21 ebenfalls drehfest eingesetzt.

Die Endbereiche 61, 62 des Stabelements 6 können in die Bohrungen 43, 23 mit Übermaß eingepresst sein, so dass eine kraftschlüssige Verbindung gebildet wird. Es ist ebenfalls möglich, den Endbereichen 61, 62 und damit korrespondierend den Bohrungen 43, 23 einen unrunden Querschnitt zu geben, beispielsweise einen Mehrkant, so dass bezüglich einer Drehung um die Achse 400, 210 ein Formschluss gebildet wird. Eine weitere Möglichkeit zur Erzeugung einer belastbaren drehmomentschlüssigen Verbindung besteht darin, die Endbereiche 61, 62 des Stabelements und/oder die Bohrungen 43, 23 mit einer Längsverzahnung zu versehen, die sich beim axialen Einpressen in die Fügefläche des Verbindungspartners unter plastischer Verformung einfurcht. Auf diese Weise kann ein besonders belastbarer Kraft- und Formschluss ausgebildet werden. Alternativ oder zusätzlich kann ein Stoffschluss erzeugt werden, beispielsweise durch eine Verklebung durch Einbringen von Klebstoff, eine Verschweißung durch Reib-, Ultraschall- oder Laserschweißverfahren oder dergleichen. Ein Einsatz von zusätzlichen Verbindungselementen, wie Stiften, Passfedern, Keilen oder dergleichen ist grundsätzlich ebenfalls denkbar.

Die Ausbildung des Stabelements 6 als zunächst separatem Bauteil hat den Vorteil, dass das Material frei gewählt werden kann, beispielsweise mit einem größeren oder kleineren Schubmodul oder anderen von der Motorwelle 40 oder der Schnecke 21 abweichenden Materialeigenschaften.

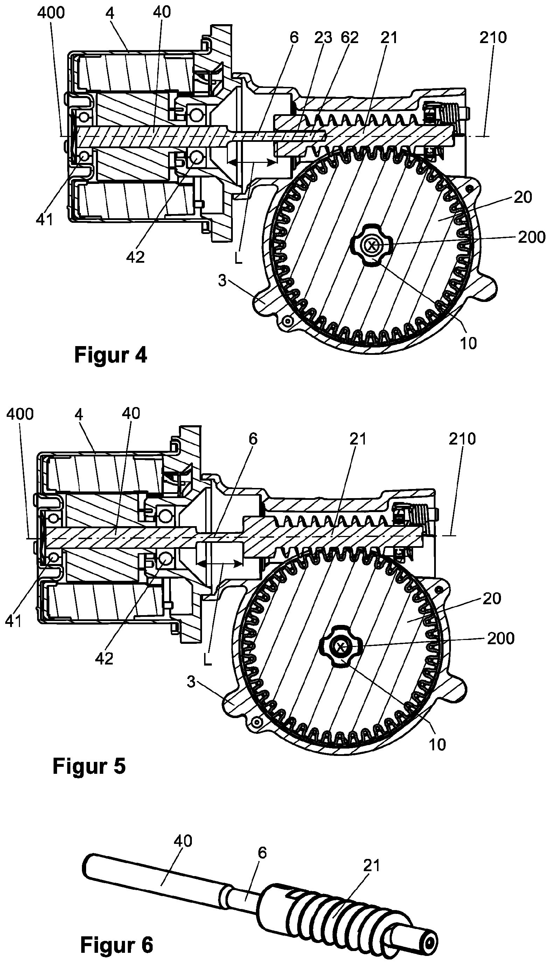

Gemäß einer in Figur 4 gezeigten alternativen Ausführungsform ist die Motorwelle 40 mit dem Stabelement 6 einstückig ausgebildet, d.h. aus einem Materialstück gefertigt. So kann die üblicherweise aus Stahl bestehende Motorwelle 40 abtriebsseitig in einen Abschnitt mit geringerem Durchmesser übergehen, welcher das Stabelement 6 bildet. Eine derartige Formgebung einer Motorwelle 40 kann besonders rationell gefertigt werden, beispielsweise indem der Querschnitt des Abschnitts, der das Stabelement 6 bildet, nichtspanend durch Pressen oder Rollen verringert wird, bis die gewünschte, verglichen mit der Motorwelle 40 geringere Torsionssteifigkeit erreicht wird. Am freien Endbereich 62 kann ebenso einfach eine Längsverzahnung eingebracht werden, die eine kraft- und formschlüssige Verbindung mit der Schnecke 21 durch eine einfach ausführbare axiale Einpressung ermöglicht.

Eine weitere alternative Ausführungsform ist in Figur 5 dargestellt, bei der die Motorwelle 40 zusammen mit dem Stabelement 6 und der Schnecke 21 einstückig ausgebildet ist, d.h. aus einem Materialstück gefertigt ist. Auf diese Weise wird ein einziges integrales Bauteil gebildet, welches ohne Fügeverbindungen auskommt und rationell herstellbar ist. In dieser Ausführung können die elastischen Eigenschaften des Stabelements 6 durch seine Abmessungen und Formgebung beeinflusst werden. Darüber hinaus ist es denkbar, wenn als Werkstoff Stahl verwendet wird, über eine partielle thermische Behandlung die einzelnen funktionalen Bereiche Motorwelle 40, Stabelement 6 und Schnecke 21 mit unterschiedlichen Materialeigenschaften wie Festigkeit, Härteoder dergleichen zu versehen. Es ist ebenfalls möglich, durch eine Oberflächenbehandlung, beispielsweise eine Hartstoffbeschichtung oder dergleichen die Funktionalität der einzelnen Bereiche an die gestellten Anforderungen anzupassen.

Figur 6 zeigt eine aus einer Motorwelle 40, einem Stabelement 6 und einer Schnecke 21 gebildete Baugruppe, wobei eine Bauweise gemäß Figur 3, Figur 4 oder Figur 5 realisiert sein kann.

In den dargestellten Ausführungen fluchten die Schneckenachse 210 und die Motorwellenachse 400 miteinander, d.h. in der dargestellten Schnittebene schließen sie einen Winkel α von 180° ein. Es ist allerdings auch denkbar, den Motor 4 winkelversetzt anzuordnen, so dass zwischen der Motorwellenachse 400 und der Schneckenachse 210 ein Winkel α kleiner als 180° eingeschlossen wird. Dadurch wird das Stabelement 6 in seiner freien Länge L durchgebogen, d.h. auf Biegung vorgespannt, wobei das auftretende Biegemoment sich über die Schnecke 21 radial gegen die Verzahnung des Schneckenrads 20 abgefangen wird. Mit anderen Worten wird die Schnecke 21 mit ihren Schneckengängen in kämmenden Eingriff mit dem Schneckenrad 20 angedrückt. Dadurch ergibt sich eine spielfreie Kämmung und eine hohe Laufruhe bei der Einbringung eines Hilfsdrehmoments.

### Bezugszeichenliste

- 1: Lenkwelle
- 10: Eingangswelle
- 12: Ausgangswelle
- 100: Kraftfahrzeuglenkung
- 102: Lenkrad
- 104: Lenkritzel
- 106: Zahnstange
- 108: Spurstange
- 110: lenkbares Rad
- 112: Hilfskraftunterstützung
- 114: Hilfskraftunterstützung
- 116: Hilfskraftunterstützung
- 120: kardanisches Gelenk
- 2: Vorrichtung zur Einbringung eines Hilfsdrehmoments
- 20: Schneckenrad
- 200: Schneckenradachse
- 21: Schnecke
- 210: Schneckenachse
- 22: Lagervorrichtung
- 23: Bohrung
- 4: Elektromotor
- 40: Motorwelle
- 400: Motorwellenachse
- 41: Lager
- 42: Lager
- 43: Bohrung
- 5: Sensoranordnung
- 6: Stabelement
- 61: Endbereich
- 62: Endbereich

## Patentansprüche

1. Vorrichtung (2) zur Einbringung eines Hilfsdrehmoments in eine Lenkwelle (1) einer elektro-mechanischen Hilfskraftlenkung (100), mit einem Elektromotor (4), der eine Motorwelle (40) aufweist, die drehmomentschlüssig über ein Kupplungselement (6) mit einem Getrieberad (21) gekuppelt ist, welches mit einem drehfest auf der Lenkwelle (1) angeordneten Zahnrad (20) kämmt,
**dadurch gekennzeichnet,**
**dass** das Kupplungselement ein torsionselastisches Stabelement (6) aufweist, welches torsionsweicher ist als die Motorwelle (40) und das Getrieberad (21).

2. Vorrichtung nach Anspruch 1, **dadurch gekennzeichnet, dass** die Torsionssteifigkeit des Stabelements (6) zwischen 5 Nm/° und 30 Nm/° beträgt.

3. Vorrichtung nach Anspruch 1, **dadurch gekennzeichnet, dass** die freie Länge (L) des Stabelements (6) mindestens 2 mm beträgt, bevorzugt 5 mm.

4. Vorrichtung nach Anspruch 1, **dadurch gekennzeichnet, dass** das Stabelement (6) biegeelastischer ist als die Motorwelle (40) und das Getrieberad (21).

5. Vorrichtung nach Anspruch 1, **dadurch gekennzeichnet, dass** das Stabelement (6) eine kleinere Querschnittsfläche und/ oder ein kleineres Torsionsflächenträgheitsmoment hat als die Motorwelle (40) und das Getrieberad (21).

6. Vorrichtung nach Anspruch 1, **dadurch gekennzeichnet, dass** das Stabelement (6) aus einem Werkstoff mit einem größeren, gleichen oder kleineren Schubmodul als die Motorwelle (40) und das Getrieberad (21) gefertigt ist.

7. Vorrichtung nach Anspruch 1, **dadurch gekennzeichnet, dass** das Stabelement (6) über eine kraft- und/oder form- und/oder stoffschlüssige Verbindung mit der Motorwelle (40) und/oder dem Getrieberad (21) verbunden ist.

8. Vorrichtung nach Anspruch 1, **dadurch gekennzeichnet, dass** das Stabelement (6) einstückig mit der Motorwelle (40) und/ oder dem Getrieberad (21) ausgebildet ist.

9. Vorrichtung nach Anspruch 1, **dadurch gekennzeichnet, dass** das Getrieberad als Schnecke (21) und das Zahnrad als Schneckenrad (20) ausgebildet ist.

10. Elektro-mechanische Hilfskraftlenkung (100) mit einer Vorrichtung (2) zur Einbringung eines Hilfsdrehmoments in eine Lenkwelle (1), mit einem Elektromotor (4), der eine Motorwelle (40) aufweist, die drehmomentschlüssig über ein Kupplungselement (6) mit einem Getrieberad (21) gekuppelt ist, welches mit einem drehfest auf der Lenkwelle (1) angeordneten Zahnrad (20) kämmt,
**dadurch gekennzeichnet,**
**dass** das Kupplungselement ein torsionselastisches Stabelement (6) aufweist, welches torsionsweicher ist als die Motorwelle (40) und das Getrieberad (21).

## Claims

1. Device (2) for introducing an auxiliary torque into a steering shaft (1) of an electromechanical power-assisted steering system (100), having an electric motor (4) which comprises a motor shaft (40) which is coupled fixedly in terms of torque by means of a coupling element (6) to a gearwheel (21) which meshes with a toothed wheel (20) arranged rotationally conjointly on the steering shaft(1),
**characterized**
**in that** the coupling element comprises a torsionally elastic bar element (6) which is torsionally more flexible than the motor shaft (40) and the gearwheel (21).

2. Device according to Claim 1, **characterized in that** the torsional stiffness of the bar element (6) amounts to between 5 Nm/° and 30 Nm/°.

3. Device according to Claim 1, **characterized in that** the free length (L) of the bar element (6) amounts to at least 2 mm, preferably 5 mm.

4. Device according to Claim 1, **characterized in that** the bar element (6) is more elastic in terms of bending than the motor shaft (40) and the gearwheel (21).

5. Device according to Claim 1, **characterized in that** the bar element (6) comprises a smaller cross-sectional area and/or a lower torsional geometrical moment of inertia than the motor shaft (40) and the gearwheel (21).

6. Device according to Claim 1, **characterized in that** the bar element (6) is manufactured from a material with a greater, equal or lower shear modulus in relation to the motor shaft (40) and the gearwheel (21).

7. Device according to Claim 1, **characterized in that** the bar element (6) is connected to the motor shaft (40) and/or to the gearwheel (21) by means of a force-fitting and/or form-fitting and/or cohesive connection.

8. Device according to Claim 1, **characterized in that** the bar element (6) is formed integrally with the motor shaft (40) and/or with the gearwheel (21).

9. Device according to Claim 1, **characterized in that** the gearwheel is in the form of a worm (21) and the toothed wheel is in the form of a worm wheel (20) .

10. Electromechanical power-assisted steering system (100) having a device (2) for introducing an auxiliary torque into a steering shaft (1), having an electric motor (4) which comprises a motor shaft (40) which is coupled fixedly in terms of torque by means of a coupling element (6) to a gearwheel (21) which meshes with a toothed wheel (20) arranged rotationally conjointly on the steering shaft (1),
**characterized**
**in that** the coupling element comprises a torsionally elastic bar element (6) which is torsionally more flexible than the motor shaft (40) and the gearwheel (21).

## Revendications

1. Dispositif (2) destiné à appliquer un couple d'assistance à un arbre de direction (1) d'une direction assistée électromécanique (100), avec un moteur électrique (4), qui présente un arbre de moteur (40) qui est couplé en transmission de couple par un élément de couplage (6) à une roue de transmission (21), qui engrène avec une roue dentée (20) disposée de façon calée en rotation sur l'arbre de direction (1), **caractérisé en ce que** l'élément de couplage présente un élément de barre de torsion élastique (6), qui est plus souple en torsion que l'arbre de moteur (40) et que la roue de transmission (21).

2. Dispositif selon la revendication 1, **caractérisé en ce que** la raideur en torsion de l'élément de barre (6) vaut entre 5 Nm/° et 30 Nm/°.

3. Dispositif selon la revendication 1, **caractérisé en ce que** la longueur libre (L) de l'élément de barre (6) vaut au moins 2 mm, de préférence 5 mm.

4. Dispositif selon la revendication 1, **caractérisé en ce que** l'élément de barre (6) est plus élastique en flexion que l'arbre de moteur (40) et que la roue de transmission (21).

5. Dispositif selon la revendication 1, **caractérisé en ce que** l'élément de barre (6) présente une plus petite aire de section transversale et/ou un plus petit moment d'inertie en torsion que l'arbre de moteur (40) et que la roue de transmission (21).

6. Dispositif selon la revendication 1, **caractérisé en ce que** l'élément de barre (6) est fabriqué en un matériau présentant un module de cisaillement supérieur, égal ou inférieur à celui de l'arbre de moteur (40) et de la roue de transmission (21).

7. Dispositif selon la revendication 1, **caractérisé en ce que** l'élément de barre (6) est relié à l'arbre de moteur (40) et/ou à la roue de transmission (21) par une liaison par force et/ou par forme et/ou par matière.

8. Dispositif selon la revendication 1, **caractérisé en ce que** l'élément de barre (6) est formé d'une seule pièce avec l'arbre de moteur (40) et/ou la roue de transmission (21).

9. Dispositif selon la revendication 1, **caractérisé en ce que** la roue de transmission est formée par une vis sans fin (21) et la roue dentée est formée par une roue à vis sans fin (20).

10. Direction assistée électromécanique (100) dotée d'un dispositif (2) destiné à appliquer un couple d'assistance à un arbre de direction (1), avec un moteur électrique (4), qui présente un arbre de moteur (40) qui est couplé en transmission de couple par un élément de couplage (6) à une roue de transmission (21), qui engrène avec une roue dentée (20) disposée de façon calée en rotation sur l'arbre de direction (1), **caractérisée en ce que** l'élément de couplage présente un élément de barre de torsion élastique (6), qui est plus souple en torsion que l'arbre de moteur (40) et que la roue de transmission (21).
